# FASCICULE DE BREVET EUROPEEN

(11) **EP 1 902 215 B1**
(45) Date de publication et mention de la délivrance du brevet: **02.02.2011**
(21) Numéro de dépôt: 06763453.5
(22) Date de dépôt: 01.06.2006
(51) Int. Cl.: F02N 11/10, B60R 25/04, B60K 28/04, B60K 28/12

(54) **PROCEDE DE GESTION DU MOTEUR D'UN VEHICULE**
VERFAHREN ZUM STEUERN EINES FAHRZEUGMOTORS
METHOD FOR CONTROLLING A VEHICLE ENGINE

(30) Priorité: 03.06.2005 FR 0505747
(43) Date de publication de la demande: 26.03.2008
(73) Titulaire: Valeo Sécurité Habitacle, 94046 Créteil Cedex (FR)
(72) Inventeur: RANIER, Marc, F-94042 Créteil Cedex (FR)
(74) Mandataire: Jacquot, Ludovic R. G.
(86) Numéro de dépôt international: PCT/EP2006/062831
(87) Numéro de publication internationale: WO 2006/128900

(56) Documents cités:
- FR-A- 2 823 702
- US-A1- 2003 135 321
- PATENT ABSTRACTS OF JAPAN vol. 2003, no. 12, 5 décembre 2003 (2003-12-05) & JP 2005 076769 A (TOYOTA MOTOR CORP), 24 mars 2005 (2005-03-24)

## Description

La présente invention concerne un procédé de gestion de l'état du moteur d'un véhicule disposant d'un système d'accès et/ou démarrage sans clé. Elle concerne plus particulièrement la mise du moteur à l'état « Idle Stop » ainsi que le passage de l'état « Idle Stop » à l'état « Moteur Tournant» et inversement.

Un moteur de véhicule comporte classiquement quatre états moteurs, définis comme suit :
- « Moteur Arrêté» : la vitesse du moteur est nulle et le contact moteur, via une clé ou un transpondeur, n'est soit pas mis/enclenché, c'est-à-dire que la clé ou le transpondeur n'a pas été inséré pour autoriser le démarrage du moteur, soit il a été mis/enclenché mais aucune action pour activer le démarrage du moteur n'a été réalisé, soit encore il a été mis/enclenché, le démarreur activé puis le moteur arrêté par une action volontaire de l'utilisateur,
- « Moteur Calé » : le contact moteur est mis/enclenché et, la vitesse du moteur est nulle, mais aucune action utilisateur n'a sollicité cette mise à zéro de la vitesse du moteur,
- « Moteur Tournant Entraîné » : le contact moteur est mis/enclenché, la vitesse du moteur est non nulle mais le moteur n'a pas acquis une vitesse suffisante pour s'entraîner lui-même de sorte qu'une impulsion de démarrage est nécessaire pour réaliser cet entraînement. Cet état constitue par ailleurs une phase transitoire aboutissant soit à l'état « Moteur Calé » soit à l'état « Moteur Tournant Autonome »,
- « Moteur Tournant Autonome » : la vitesse du moteur est non nulle et le moteur tourne à une vitesse suffisante pour s'entraîner lui-même, le contact est mis/enclenché.

Ces deux derniers états forment lorsqu'ils sont associés l'état « Moteur Tournant ».

L'état « Idle Stop » d'un moteur où le régime moteur, ou la vitesse du moteur, est nulle et le contact moteur est mis/enclenché est équivalent à l'état « Moteur Calé ». Lors de la mise du moteur à l'état « Idle Stop », il n'y a classiquement aucune mise en marche des systèmes antivols, notamment le blocage de la colonne de direction.

L'état « Idle Stop » d'un moteur est enclenché par un système alterno-démarreur lorsque le moteur et des conditions d'environnement vérifient certaines règles prédéfinies. A titre d'exemple, ces règles consistent notamment dans la détection de la vitesse nulle (levier de vitesse au point mort ou vitesse du véhicule inférieure à un certain seuil), une température du moteur dans une certaine plage, un niveau d'énergie de la batterie suffisant et une pression continue de l'utilisateur sur la pédale de frein. Un tel système d'alterno-démarreur est divulgué notamment dans le document FR 2745445 et ne sera donc pas décrit plus avant dans la présente demande.

A l'heure actuelle, il n'existe pas de combinaison satisfaisante d'un système alterno-démarreur avec un système sans clé dans lequel un système embarqué d'identification dans le véhicule coopère avec un ou plusieurs identifiant(s) porté(s) par l'utilisateur de manière à commander la condamnation/décondamnation des ouvrants du véhicule et activer les moyens contre une utilisation non autorisée du véhicule, en particulier le blocage de la colonne de direction généralement réalisé par un dispositif électromécanique.

En effet, ces deux systèmes doivent être sûrs de fonctionnement de manière à ne pas s'enclencher intempestivement et/ou ne pas mettre en danger la sécurité des personnes.

A titre d'exemple, il n'est pas imaginable que, si le moteur est passé à l'état « Idle Stop », le blocage de la colonne de direction survienne, ce qui pourrait engendrer un accident si un redémarrage du véhicule, demandé ou non par le conducteur, avait lieu avant que la colonne ne soit débloquée.

De même, il n'est pas imaginable que le système alterno-démarreur remette en route sans précaution le moteur lors une phase d'« Idle Stop », plus particulièrement si le conducteur n'est plus dans l'habitacle.

Une première solution à ces problèmes de sécurité est proposée dans le document US 686545, elle consiste dans l'interrogation systématique de l'identifiant et/ou la vérification de la présence d'un conducteur lors des demandes de redémarrage du moteur ne provenant pas du conducteur. Cette solution vise essentiellement à résoudre le problème lié aux sécurités inhérentes au système alterno-démarreur, à savoir si une demande de redémarrage du moteur non sollicitée par le conducteur a lieu tandis que le moteur est à l'état « Idle Stop », par exemple parce que la batterie devient trop faible, celle ci sera réalisée uniquement si un identifiant ou le conducteur est détecté. Un autre example est proposé par le document US- 2003/01 35321*.*

Une deuxième solution à ces problèmes de sécurité est proposée dans ce même document et consiste à réaliser un redémarrage du moteur dès lors qu'un ouvrant est détecté ouvert. Cette solution vise essentiellement à restreindre la poursuite du mode « Idle Stop », en faisant sortir le moteur de ce mode dès l'ouverture d'un ouvrant.

Ces deux solutions, lorsqu'elles sont associées à une coupure du contact dès la non détection de l'identifiant ou du conducteur comme décrit dans le document US 686545, résolvent la majeure partie des problèmes de sécurité liés à la combinaison Alterno-démarreur et Accès et/ou Démarrage sans clé. Cependant, de tels procédés révèlent certaines lacunes. En premier lieu, ils s'avèrent peu disponibles et peu confortables pour l'utilisateur.

En effet, de tels procédés sont très consommateur d'énergie notamment lors de chaque redémarrage du moteur porte ouverte, lors des phase de communication entre le système embarqué d'identification et l'identifiant, ainsi que lors de chaque activation/désactivation du contact et des moyens de blocage de la colonne de direction. De cette manière, on tend à décharger très rapidement la batterie du véhicule et/ou de l'identifiant et donc à ne plus autoriser la mise à l'état ou en mode « Idle Stop » du moteur.

Par ailleurs, ce type de systèmes ne résout pas les problèmes liés à la nécessité de protéger l'environnement et la baisse de la consommation de carburant, non seulement lorsque le véhicule se trouve dans des embouteillages, ou à un feu, mais également lors d'actions courantes. En effet, à l'heure actuelle, il n'existe pas de systèmes aptes à mettre le moteur à l'état « Idle Stop » de manière automatique, sans aucune action de l'utilisateur, par exemple lorsque le conducteur veut aller acheter un produit chez un commerçant et qu'il s'est garé rapidement en laissant son moteur à l'état « Moteur Tournant ».

La présente invention vise en particulier à résoudre les inconvénients de l'art antérieur lorsque l'on combine un système embarqué d'identification coopérant avec au moins un identifiant portatif, avec un système d'alterno-démarreur apte à passer à l'état « Idle Stop» dans des conditions prédéterminées depuis un état « Moteur Tournant » et inversement, tout en apportant un confort supplémentaire à l'utilisateur en autorisant la mise à l'état « Idle Stop » sans aucune action spécifique de celui-ci.

La présente invention concerne un procédé de gestion du moteur d'un véhicule, dans lequel le véhicule comprend un système embarqué d'identification coopérant avec au moins un identifiant portatif équipé de moyens de communications électromagnétiques en vue d'identifier un utilisateur autorisé, ledit système comporte des moyens aptes à détecter les états ouvert/fermé et/ou verrouillé/déverrouillé des ouvrants, des moyens de condamnation/décondamnation des ouvrants du véhicule, un moyen de commande dans le véhicule apte à déclencher le démarrage du moteur lorsqu'il est actionné par l'utilisateur, et un système d'alterno-démarreur apte à passer à l'état « Idle Stop» dans des conditions prédéterminées depuis un état « Moteur Tournant » et inversement, caractérisé en ce qu'il comprend une étape de détection de changement d'état ouvert/fermé et/ou verrouillé/déverrouillé d'au moins un ouvrant du véhicule, une étape d'interrogation de l'identifiant par le système embarqué de sorte que si au moins un identifiant est localisé à l'extérieur de l'habitacle du véhicule et qu'aucun identifiant n'est détecté à l'intérieur, le moteur passe de l'état « Moteur Tournant » à l'état « Idle Stop » ; la mise à l'état « Idle Stop » du moteur s'effectuant alors que l'ensemble des susdites conditions prédéterminées, ou seulement une partie, est vérifiée.

Ainsi, il est dorénavant possible de mettre le moteur à l'état « Idle Stop » de façon classique, c'est-à-dire lorsque les conditions d'enclenchement prédéterminées sont vérifiées (telles que notamment la température du moteur qui se trouve dans une certaine plage, aucun passage de vitesse enclenché ou une vitesse du véhicule inférieure à une valeur seuil, la pédale de frein enfoncée, pas de demande de chauffage/ventilation important, un niveau de tension suffisant pour la batterie...), et également de mettre le moteur à l'état « Idle Stop » de manière automatique, sans nécessiter les conditions prédéterminées ou sans nécessiter l'ensemble de ces conditions prédéterminées (par exemple pas de demande de chauffage/ventilation important et un niveau de tension suffisant pour la batterie), lorsqu'au moins un identifiant est localisé à l'extérieur de l'habitacle du véhicule et qu'aucun identifiant n'est détecté à l'intérieur, et donc que l' (les) utilisateur(s), est (sont) repéré(s) à l'extérieur de l'habitacle du véhicule.

D'autres particularités et avantages de l'invention sont apparents ci-après :
- suite à la mise à l'état « Idle Stop » du moteur et la condamnation des ouvrants depuis l'extérieur du véhicule, une étape de temporisation est enclenchée afin de déterminer le temps écoulé depuis ce changement d'état du moteur ;
- un temps de référence, ou de seuil, existe relativement à la susdite étape de temporisation de sorte que si l'étape de temporisation détermine un temps écoulé supérieure à ce temps de référence, le contact est coupé/désactivé de sorte que le moteur passe de l'état « Idle Stop » à l'état « Moteur Arrête » ;
- si un ordre de condamnation d'au moins un ouvrant du véhicule est transmis par télécommande au véhicule via un identifiant lorsque le moteur est à l'état « Idle Stop », le contact est coupé/désactivé de sorte que le moteur à l'état « Idle Stop » passe à l'état « Moteur Arrêté »;
- le passage d'état du moteur depuis l'état « Idle Stop » à l'état
   « Moteur Tournant » s'effectue par une simple action de l'utilisateur après le déverrouillage du véhicule, par exemple une pression sur la pédale d'embrayage ou d'accélération, sans qu'il n'existe d'étape de redémarrage du moteur à l'ouverture de porte ni d'identification spécifique par le système embarqué comme cela est le cas dans le brevet US 686545
- au moins une étape de détermination du niveau de la batterie du véhicule a lieu lorsque le moteur est à l'état « Idle Stop » ;
- l'étape de détermination du niveau de la batterie comprend une étape de comparaison de ce niveau avec un niveau de référence, ou seuil, de sorte que lorsque le niveau de la batterie est inférieur ou égal à ce niveau de référence, le système embarqué d'identification effectue un test de présence d'identifiant(s) dans une zone déterminée, en particulier dans l'habitacle du véhicule ;
- si le test de présence d'identifiant(s) dans la zone déterminée est positif, signifiant la présence effective d'au moins un identifiant dans l'habitacle, le moteur passe directement, c'est à dire sans action de l'utilisateur, de l'état « Idle Stop » à l'état « Moteur Tournant » et si le test de présence est négatif, le contact est coupé/désactivé de sorte que le moteur passe de l'état « Idle Stop » à l'état « Moteur Arrêté » ;
- si le moteur est dans l'état « Moteur Arrêté » consécutivement à un test de présence négatif, la mise en activité des dispositifs contre une utilisation non autorisée du véhicule, en particulier le blocage de la colonne de direction, est inhibée ;

La présente invention concerne également un dispositif pour la mise en oeuvre du procédé selon l'invention et destiné à un véhicule, caractérisé en ce qu'il comprend un système embarqué d'identification coopérant avec au moins un identifiant portatif équipé de moyens de communications électromagnétiques en vue d'identifier un utilisateur autorisé, ledit système comporte des moyens aptes à détecter les états ouvert/fermé et/ou verrouillé/déverrouillé des ouvrants, des moyens de condamnation/décondamnation des ouvrants du véhicule, un moyen de commande dans le véhicule apte à déclencher le démarrage du moteur lorsqu'il est actionné par l'utilisateur, et un système d'alterno-démarreur apte à passer à l'état « Idle Stop » dans des conditions prédéterminées depuis un état « Moteur Tournant » et inversement.
- l' (les) identifiant(s) comprend (comprennent) en outre un moyen de commande actif autorisant l'utilisateur à déclencher volontairement la condamnation/décondamnation des ouvrants.

L'invention sera mieux comprise à la lecture de la description qui suit et à la vue des figures qui l'accompagnent. Ces figures montrent:
- à la figure 1, un schéma bloc illustrant les quatre états classiques d'un moteur de véhicule auxquels sont ajoutés deux nouveaux états à savoir, l'état « Idle Stop » et l'état « Redémarrage après Idle Stop » nécessaires à la gestion du système alterno-démarreur.
- à la figure 2, un schéma bloc illustrant les étapes et conditions d'exécution dans le cadre du procédé de l'invention.

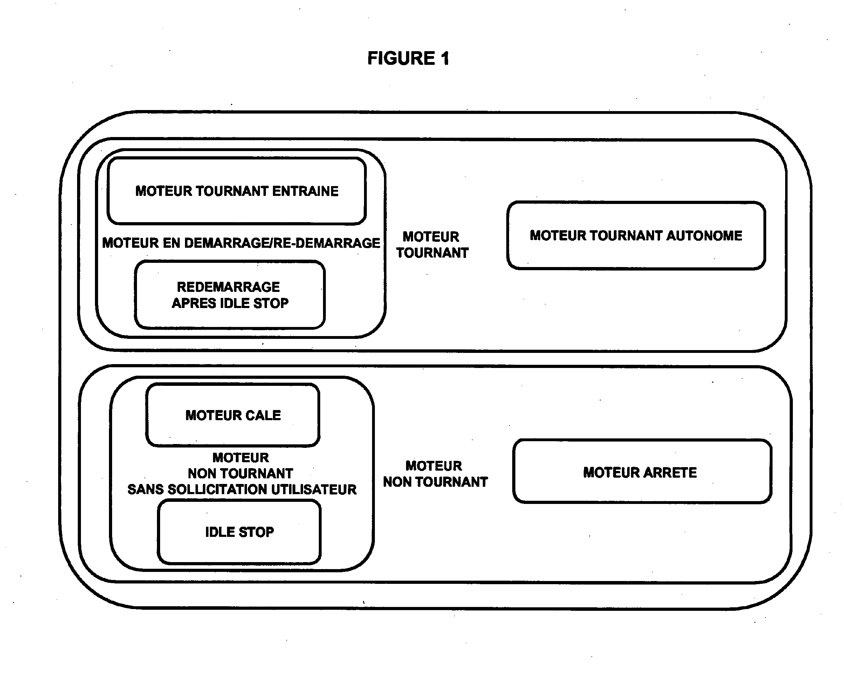

Plus précisément, la figure 1 représente les dépendances entre les états du moteur précédemment décrits ainsi que l'agencement des états « Moteur Calé » et « Idle Stop » au sein d'un état « Moteur non tournant sans sollicitation utilisateur » et l'agencement des états « Moteur tournant entraîné » et « Redémarrage après Idle Stop » au sein d'un état « Moteur tournant en Démarrage/Redémarrage ».

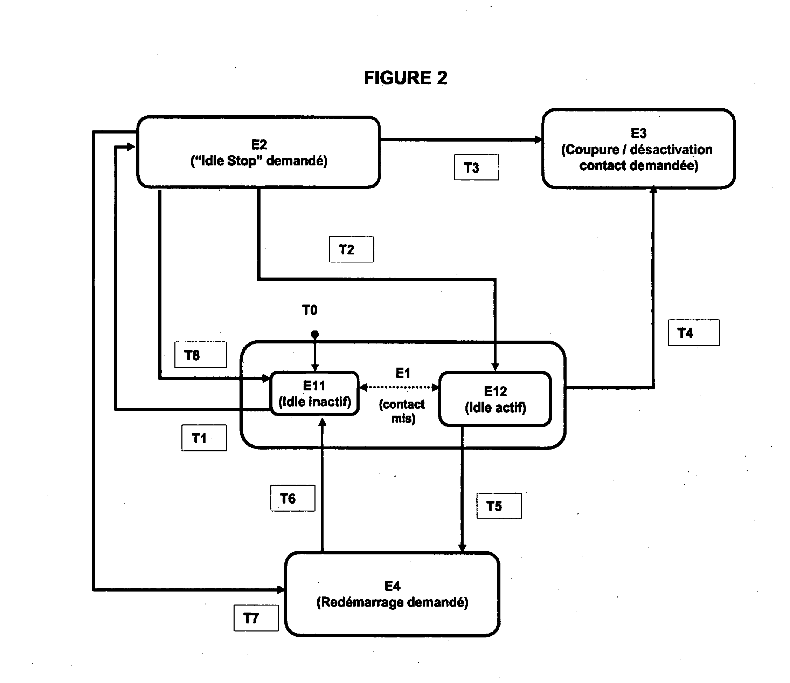

Les étapes représentées dans la figure 2 sont:
- en E1, la phase de vie du véhicule où le contact est mis/enclenché, étape qui se subdivise en deux sous-étapes E11 et E12 représentant respectivement les phases « Contact mis/enclenché et Idle Stop inactif » et « Contact mis/enclenché et Idle Stop actif » ;
- en E2, l'étape de demande d'entrée en mode « Idle Stop » du système d'alterno-démarreur par le système d'accès et/ou démarrage sans clé.
- en E3 et E4 respectivement, les étapes de demande de coupure/désactivation du contact et de demande de redémarrage moteur ; toutes deux réalisées par le système d'accès et/ou démarrage sans clé consécutivement à la mise en mode « Idle Stop » du système altemo-démarreur.

Il faut également noter, que dans cette figure, l'interaction entre les phases « Contact mis/enclenché et Idle Stop actif » (Etape E12) et « Contact mis/enclenché et Idle Stop inactif » (Etape E11), classiquement gérée par le système alterno-démarreur uniquement, est représentée sous forme de double flèche pointillée.

L'objet de la présente invention consiste à décrire la manière dont peut être réalisé l'interaction des deux systèmes, à savoir le système d'accès et/ou de démarrage sans clé et le système altemo-démarreur. Il est ainsi présenté dans la suite du document un mode d'intégration n'affectant pas la disponibilité de ces systèmes ni l'ergonomie d'une telle combinaison.

En particulier, l'état moteur en « Idle Stop » au cours de laquelle le moteur est volontairement stoppé par le système alterno-démarreur, est traité par le système d'accès et/ou démarrage sans clé comme un état d'arrêt moteur non sollicité par l'utilisateur, c'est-à-dire à l'identique de l'état « Moteur Calé ».

En effet, dans ce cas, le roulage doit reprendre sans vérification spécifique de l'authenticité de l'identifiant par l'un des deux systèmes - cette authenticité ayant déjà été vérifié auparavant et la phase de roulage n'étant pas terminée - la « phase de roulage » est définie comme la période complète entre le démarrage et l'arrêt volontaire du moteur par l'utilisateur et l'état moteur « Idle Stop » n'est évidemment pas considéré comme la fin de cette « phase de roulage ». En conséquence, il n'y a pas d'activation des dispositifs contre une utilisation non autorisée du véhicule, notamment de l'antivol de direction électromécanique (pour des raisons de sécurité) lorsque le moteur est à l'état « Idle Stop » et la sortie de cet état « Idle Stop » se réalise par une simple action de l'utilisateur, par exemple une action sur la pédale d'embrayage ou d'accélération, de la même manière que la sortie de l'état du moteur « Moteur Calé » dans le cas du moteur thermique, l'action utilisateur étant ici par exemple un simple appui sur un bouton poussoir du tableau de bord destiné à ré-enclencher le démarrage du véhicule.

Il faut noter que le nouvel état du moteur « Moteur non tournant sans sollicitation utilisateur » (fig. 1), comprenant à la fois les états « Moteur Calé » et « Idle Stop », correspond à une généralisation de l'état « Moteur Calé », et que la sortie de cet état se réalise, comme énoncé précédemment, c'est-à-dire par une seule action utilisateur, sans vérification spécifique de l'authenticité de l'identifiant.

Sur la base de cette description, il est possible de créer une logique d'interface, constituant le procédé selon l'invention. Cette logique permet alors de gérer l'interaction entre les deux systèmes, accès et/ou démarrage sans clé d'une part, et alterno-démarreur d'autre part ; et notamment, les demandes d'arrêt, de passage en mode « Idle Stop » et de redémarrage du moteur ainsi que les demandes de condamnation et décondamnation du véhicule.

Il est à noter que cette logique d'interface entre les deux systèmes se prête particulièrement bien à son intégration dans un organe participant à la fonction de démarrage, et plus particulièrement dans celui autorisant la commutation de puissance en vue du démarrage. En effet, au moyen de cette localisation, on crée un système complexe qui intègre les deux systèmes sans que toutefois l'architecture véhicule n'en soit complexifiée. Les informations nécessaires au procédé selon l'invention sont en effet gérées et/ou délivrées par chacun des deux systèmes mis en jeu.

En variante, cette logique d'interface, ou procédé de l'invention, est localisée dans l'un des deux systèmes ou encore dans un organe séparé spécialement dédié à cette intégration. Dans de tels cas, les informations nécessaires à la prise de décision par le procédé selon l'invention sont véhiculés électriquement au sein du véhicule, généralement par l'intermédiaire d'un bus de données.

Il est par ailleurs à noter que dans le tout dernier cas (intégration dans un organe séparé), certaines informations peuvent nécessiter une transformation par cet organe. Dans un tel cas, la fonction de transfert d'un tel organe est fortement dépendante des deux systèmes et de leurs stratégies propres, néanmoins, elle réalise préférentiellement l'interface entre les deux systèmes de façon à éviter les modifications sur l'un d'entre-eux (ou même les deux).

A titre d'exemple, l'information « Moteur en Idle Stop » générée par le système Alterno-démarreur et non consommée habituellement par un système d'accès et/ou démarrage sans clé est transformée dans un tel organe en information « Moteur Calé », ce qui permet son utilisation directe par le système d'accès et/ou démarrage sans clé, c'est-à-dire sans création ou modification de stratégies dans ce dernier système.

La logique d'interface, constituant le procédé selon l'invention, possède de nombreux avantages en terme d'architecture ou de fonctions véhicule:
En terme d'architecture véhicule, un tel procédé possède l'avantage de permettre la suppression de certaines redondances comme, à titre d'exemple, l'acquisition de l'information frein, réalisée par les deux systèmes. Un tel procédé possède en outre l'avantage de ne pas complexifier l'architecture véhicule dans le cas d'un système entièrement intégré.

En terme de fonctions véhicule, un tel procédé possède l'avantage de permettre d'offrir des fonctions nouvelles qui sont notamment :
- une fonction de mise en mode basse consommation du groupe motopropulseur (état « Idle Stop » du moteur), sur détection de la disparition du dernier identifiant de l'intérieur de l'habitacle,
- une fonction de verrouillage du véhicule, arrêt du moteur et mise en veille des circuits électroniques du véhicule, même si la demande de l'utilisateur se réalise à l'état « Moteur Tournant », par l'intermédiaire d'une mise à l'état « Idle Stop » avant la coupure/désactivation du contact provoquant l'arrêt définitif à l'issue d'une temporisation, c'est-à-dire le passage du moteur à l'état « Moteur Arrêté ».

Ces fonctions permettent par ailleurs de résoudre les problèmes d'oubli du moyen d'accès et de démarrage que posait la clé mécanique et de parer aux nouveaux comportements utilisateur qui sont induits par la volatilité de l'identifiant.

Dans la suite, on se propose de décrire un exemple de réalisation utilisant l'ensemble de ces nouvelles fonctions en prenant appui sur un cas d'utilisation courante.

Il est à noter que dans cet exemple de réalisation, la logique caractérisant le procédé selon l'invention est considérée comme implémentée dans le système embarqué d'identification. De plus, on considère que le système embarqué d'identification peut agir directement sur le contact et les ouvrants du véhicule (resp. activation / désactivation et verrouillage / déverrouillage).

Considérons tout d'abord un véhicule à l'arrêt.

Le conducteur commence par démarrer son véhicule. Il s'agit alors du premier démarrage du système alterno-démarreur qui aboutira à l'état « Moteur Tournant Autonome ». Ce démarrage est illustré sur le schéma de la figure 2 et correspond à la transition T0.

Après un premier roulage, le véhicule passe alors en phase de vitesse décroissante, c'est-à-dire qu'il va vers une vitesse du véhicule nulle.

Le véhicule étant à l'arrêt, le conducteur réalise un mouvement d'ouvrant, typiquement pour sortir de son véhicule. Classiquement, le système d'accès et/ou de démarrage sans clé réalise dans ces conditions une recherche de la présence du ou des l'identifiant(s) à l'intérieur et/ou à l'extérieur de l'habitacle.

Afin de réaliser la nouvelle fonctionnalité et donc le procédé selon l'invention, le système d'accès et/ou de démarrage sans clé recherche, sous des conditions légèrement modifiées, l' (les) identifiant(s) à l'extérieur et à l'intérieur du véhicule.

Ces nouvelles conditions sont :
- le passage en deçà d'une vitesse seuil, afin d'anticiper la recherche d'identifiant(s) qui a lieu classiquement à l'arrêt du moteur du véhicule,
- ou le mouvement d'ouvrant, à savoir l'ouverture ou la fermeture d'un ouvrant,
- ou le changement d'état (verrouillé/déverrouillé) d'un ou des ouvrants du véhicule, à savoir la condamnation/décondamnation d'un ou des ouvrants.

Relativement à l'identification du ou des l'identifiant(s), quatre cas peuvent alors se présenter :
- au moins un identifiant est détecté à l'intérieur et à l'extérieur de l'habitacle,
- au moins un identifiant est détecté à l'intérieur et aucun identifiant n'est détecté à l'extérieur,
- aucun identifiant n'est détecté à l'intérieur mais au moins un identifiant est détecté à l'extérieur,
- aucun identifiant n'est détecté dans les deux zones (intérieure et extérieure).

Si le ou les identifiant(s) est/sont détecté(s) uniquement à l'extérieur du véhicule: il y a eu disparition de tous les identifiants de l'intérieur de l'habitacle, le système embarqué d'identification fait une demande de mise du moteur à l'état « Idle Stop » au système d'alterno-démarreur, comme cela est illustré sur le schéma de la figure 2 à l'étape E2. Les conditions décrites ci-dessus correspondent par ailleurs à une partie de la transition T1.

Dans toutes les autres configurations (y compris, la disparition de la zone extérieure ou la détection dans la zone intérieure), le système embarqué d'identification ne réalise aucune demande au système d'alterno-démarreur puisque dans ces conditions,
- soit au moins un identifiant est dans le véhicule (le système d'alterno-démarreur peut éventuellement s'enclencher, mais ceci constitue l'utilisation classique du système d'alterno-démarreur, avec des conditions prédéterminées à vérifier,
- soit on ne sait pas où est/sont réellement le ou les identifiant(s).

La mise du moteur à l'état « Idle Stop », demandée par le système embarqué d'identification à l'étape E2 de la figure 2 puis génératrice lors de sa réalisation du passage par la transition T2, n'a lieu que si le système alterno-démarreur l'acquitte, c'est-à-dire que certaines conditions propres au système alterno-démarreur et nécessaires à la mise du moteur dans cet état peuvent être vérifiées au moment de la transition. A titre d'exemple, on peut citer la température du moteur qui doit être dans une certaine plage.

Dans le cas où le système alterno-démarreur n'acquitte pas la mise à l'état « Idle Stop » dans le temps de référence, ou de seuil, le système embarqué d'identification revient à l'état initial E11 et attend la survenue de nouvelles conditions de passage. Ce cas est illustré sur le schéma par la transition T8. En complément, le système d'accès et/ou démarrage sans clé génère une alerte de façon à signaler à l'utilisateur que le moteur est resté tournant.

La demande de mise du moteur à l'état « Idle Stop » se réalise également à la détection d'un événement de déclenchement, soit de manière classique par l'action de l'utilisateur (les conditions prédéterminés étant par ailleurs vérifiées) soit lorsque le moteur est à l'état « Moteur Tournant », que tous les identifiants sont repérés comme ayant quitté l'habitacle (seulement une partie des conditions prédéterminés étant vérifiées), et que le verrouillage du véhicule se produit de manière passive :
- soit par activation d'une zone ou d'un bouton situé sur la poignée du véhicule et détection d'au moins un identifiant à l'extérieur du véhicule,
- soit lors de la détection de l'éloignement (au delà d'une zone prédéterminée autour du véhicule) ou de la disparition du dernier identifiant présent dans le véhicule, classiquement au-delà d'un rayon d'environ deux mètres autour du véhicule alors que le système embarqué d'identification ne détecte plus d'identifiant et que l'un d'eux ait été au moins une fois détecté.

Dans ces deux cas, le système embarqué d'identification réalise, en complément du verrouillage du véhicule, une nouvelle demande de mise à l'état « Idle Stop » au système alterno-démarreur si le moteur est encore dans l'état « Moteur Tournant ».

Ce cas est illustré sur le schéma de la figure 2 à l'étape E2 et les conditions décrites ci-dessus correspondent à une partie de la transition T1.

Une fois le véhicule verrouillé moteur à l'état « Idle Stop », deux cas peuvent se présenter :
1/ L'utilisateur revient à son véhicule avant l'échéance de la temporisation, auquel cas, il lui suffit de déverrouiller normalement son véhicule (par activation d'une des poignées du véhicule ou appui sur un bouton poussoir de l'identifiant) pour retrouver son véhicule prêt à une phase de roulage.
   Ceci permet d'éviter dans cette configuration la nécessité d'une phase de redémarrage moteur, comme auparavant la phase d'arrêt du moteur, avant de verrouiller le véhicule, a pu être évitée. De cette manière, le conducteur peut quitter temporairement son véhicule à l'état « Moteur Tournant » en toute sécurité et sans pollution excessive.
2/ L'utilisateur n'est pas revenu à son véhicule avant l'échéance de temporisation.

Dans ce cas, le mode « Idle Stop » du moteur est stoppé à l'échéance de la temporisation, le contact est coupé/désactivé par le système embarqué d'identification, faisant ainsi passer le moteur à l'état « Moteur arrêté ». En complément, le système embarqué d'identification active les systèmes de protection du véhicule, par exemple l'antivol de direction, puis met en veille les circuits électroniques du véhicule et inhibe ses demandes d'entrée dans le mode « Idle Stop » jusqu'au redémarrage complet du véhicule (représenté par la transition T0 de la figure 2). Une telle inhibition permet d'éviter toute réentrée intempestive dans cet état.

D'un point de vue fonctionnel, on retrouve, à l'issue de la temporisation, les fonctionnalités classiques d'un système de type Mains Libres. Ce cas est illustré sur le schéma de la figure 2 à l'étape E3 et les conditions décrites ci-dessus correspondent à une partie de la transition T4.

Il est important de noter qu'au moyen de ce procédé, le passage du moteur de l'état « Idle Stop » à l'état « Moteur arrêté » ainsi que son redémarrage (état « Moteur en Démarrage/Redémarrage ») peut se réaliser sans aucun appui sur le bouton de démarrage.

Il est évident que les stratégies décrites dans le présent document doivent coexister entre elles. Par exemple, et comme cela a été décrit, la fonction de condamnation (verrouillage d'ouvrant), arrêt du moteur et mise en veille des circuits électronique du véhicule peut être vue comme une fonction complémentaire de la fonction de mise à l'état « Idle Stop » sur détection de la disparition de l'identifiant à l'intérieur de l'habitacle.

Ces stratégies doivent être par ailleurs couplées à certaines autres déjà existantes, de manière notamment à éviter la survenue d'événements indésirables pouvant affecter la sécurité ou la disponibilité du véhicule.

Ces évènements sont notamment :
- l'entrée (ou la sortie) intempestive de l'état « Idle Stop » du fait d'une demande du système embarqué d'identification elle-même intempestive,
- la mise hors service de la batterie du véhicule provoquant l'arrêt intempestif du moteur, ces deux évènements étant consécutifs à un passage du moteur à l'état « Idle Stop » demandé (légitimement) par le système embarqué d'identification,
- le redémarrage du véhicule par un utilisateur non autorisé, ou même sans utilisateur, pendant que le moteur est à l'état « Idle Stop ».

Pour éviter les demandes intempestives d'entrée du moteur à l'état « Idle Stop », le système embarqué d'identification inhibe ses demandes d'entrée ou de réentrée dans cet état dès qu'il ne sait pas localiser l'identifiant lors d'une interrogation, c'est-à-dire savoir si celui-ci, et par conséquence un utilisateur, est à l'intérieur ou à l'extérieur de l'habitacle.

La restauration des demandes d'entrée du moteur à l'état « Idle Stop » ne se réalise qu'après un événement assurant la présence d'un identifiant à l'intérieur (cas classique de mise à l'état « Idle Stop » avec les conditions prédéterminées vérifiées) ou à l'extérieur (mise à l'état « Idle Stop » spécifique à la présente invention) du véhicule, quelque soit le mode d'interrogation de l'identifiant.

Pour éviter la mise hors service de la batterie du véhicule, et donc l'arrêt intempestif du moteur à partir d'un état « Idle Stop », le système embarqué d'identification met en oeuvre des stratégies spécifiques de sorte que l'arrêt du moteur ne pourra s'effectuer qu'en dernier ressort.

Une première stratégie mise en oeuvre par le système embarqué est l'inhibition de toutes ses demandes d'entrée ou de ré-entrée dans un état « Idle Stop » dès lors que la batterie est détectée faible et que le moteur est dans l'état « Moteur Tournant ». Cette inhibition se réalise comme suit :
A détection du passage du niveau de charge de la batterie en deçà d'un niveau de référence, ou de seuil, par ailleurs préférentiellement calculé en fonction du besoin d'énergie pour un redémarrage complet, le système embarqué d'identification ne réalise plus aucune demande d'entrée ou de ré-entrée du moteur dans l'état « Idle Stop ».

Comme précédemment, la restauration des demandes d'entrée du moteur dans l'état « Idle Stop » ne se réalise qu'après détection du passage du niveau de charge de la batterie au delà d'un second niveau de référence, ou seuil (identique ou différent du premier niveau seuil).

Une seconde stratégie est mise en oeuvre pour prendre en compte les cas où l'état moteur est déjà « Idle Stop » (fig. 2, Etape E12) ou ceux où la demande d'entrée en « Idle Stop » a été formulée (fig. 2, Etape E2). Dans ces cas, le système embarqué d'identification réalise, préférentiellement en complément de la stratégie précédemment décrite (inhibition de la réalisation de toute demande d'entrée ou de réentrée dans cet état), la stratégie suivante:
A détection du passage du niveau de la batterie en deçà d'un niveau de référence, le système d'accès et/ou de démarrage sans clé réalise une recherche du ou des identifiant(s) à l'extérieur et à l'intérieur du véhicule.

Le résultat de cette recherche (présence ou absence du ou des l'identifiant(s) à l'intérieur de l'habitacle) est exploitée en regard de l'état des ouvrants du véhicule (ouvert/fermé et/ou verrouillé/déverrouillé).

Trois cas peuvent alors se présenter :
1/ Les ouvrants du véhicule sont tous fermés et condamnés, et cette condamnation s'est réalisée autrement que par une action volontaire de l'utilisateur sur l'identifiant (télécommande) ; ce qui correspond aux condamnations réalisées de manière passive:
   Dans ce cas, le système embarqué d'identification coupe/désactive le contact de sorte que l'état « Idle Stop » est stoppé et que la temporisation précédemment lancée n'est pas réalisée. En complément, la stratégie classique de condamnation avec activation immédiate des systèmes de protection et mise en veille des circuits électroniques du véhicule est effectuée.
   Ce cas est illustré sur le schéma de la figure 2 à l'étape E3 et les conditions décrites ci-dessus correspondent à une partie des transitions T4 et T3. Ces transitions correspondent respectivement aux conditions de coupure/désactivation du contact par le système embarqué d'identification depuis un état « Idle Stop » actif (E12) ou pendant que le système embarqué d'identification réalise des demandes d'entrée dans l'état « Idle Stop » (E2).
2/ Au moins un ouvrant du véhicule est ouvert ou décondamné et au moins un identifiant a été détecté à l'intérieur du véhicule:
   Dans ce cas, l'état « Idle Stop » peut être stoppé au profit d'un redémarrage moteur (état « Redémarrage après Idle Stop » puis « Moteur Tournant Autonome ») puisque dans ces conditions, le système embarqué d'identification est certain de la présence de l'identifiant dans le véhicule.
   Ce cas est illustré sur le schéma de la figure 2 à l'étape E4 et les conditions décrites ci-dessus correspondent à tout ou partie des transitions T5, T6 et T7. Ces transitions correspondent respectivement aux conditions d'émission de demande de redémarrage du moteur par le système embarqué d'identification depuis un état « Idle Stop » actif (E12), d'acquisition de l'état « Moteur Tournant Autonome » par le système embarqué d'identification, et aux conditions d'émission d'une demande de redémarrage du moteur par le système embarqué d'identification alors que celui-ci réalise des demandes de mise du moteur à l'état « Idle Stop » (E2).
3/ Au moins un ouvrant du véhicule est ouvert ou décondamné et aucun identifiant n'a été détecté à l'intérieur du véhicule:
   Dans ce cas, le système embarqué d'identification coupe/désactive le contact de sorte que l'état « Idle Stop » est stoppé et que la temporisation précédemment lancée n'est pas réalisée. En complément et préférentiellement, le système embarqué d'identification inhibe dans ce même cas l'activation des systèmes de protection du véhicule (antivol de direction notamment) afin de conserver de la disponibilité au véhicule.

Ce cas est également illustré sur le schéma de la figure 2 à l'étape E3 et les conditions décrites ci-dessus correspondent à une partie des transitions T4 et T3.

La stratégie décrite ci-dessus est par ailleurs généralisable dans tous les cas où il y a perte d'une des conditions de sécurité du mode « Idle Stop », comme par exemple la présence d'une information frein active, ou qu'une demande de redémarrage du véhicule est détectée alors qu'aucun identifiant n'a été précédemment détecté à l'intérieur de l'habitacle par la système embarqué d'identification, lors du dernier démarrage, de la dernière décondamnation ou du dernier mouvement d'ouvrant.

Cette stratégie permet d'éviter le redémarrage du véhicule par un utilisateur non autorisé (ou sans utilisateur) alors que le moteur est à l'état « Idle Stop ».

La condamnation par télécommande des ouvrants d'un véhicule, dont l'état moteur est déjà « Idle Stop » (fig. 2, Etape E12) ou alors que la demande d'entrée en « Idle Stop » est formulée par le système embarqué d'identification mais non encore acquittée par le système alterno-démarreur (fig. 2, Etape E2), doit être gérée spécifiquement et très simplement, qu'un identifiant ait pu être localisé ou non. En effet, contrairement aux autres actions de condamnation où il n'y a pas d'opération directe sur l'identifiant, il s'agit dans ce cas d'une condamnation délibérée de l'utilisateur.

Dans ce cas, il faut considérer cette action prioritaire et le procédé réalise, dans toutes les configurations identifiant - véhicule, une coupure/désactivation du contact de sorte que l'état « Idle Stop » est stoppé au profit de l'état « Moteur Arrêté » et que la temporisation, éventuellement lancée à l'étape E12 n'est pas réalisée. En complément, la condamnation du véhicule, l'inhibition de toute demande d'entrée ou de ré-entrée dans l'état « Idle Stop », ainsi que l'activation des systèmes de protection du véhicule (antivol de direction notamment) sont réalisés,.

Il faut noter qu'il s'agit d'un mode de « rétablissement » de la stratégie classique de condamnation avec activation immédiate des systèmes de protection et mise en veille des circuits électroniques du véhicule.

Comme précédemment, ce cas est également illustré sur le schéma de la figure 2 à l'étape E3 et les conditions décrites ci-dessus correspondent à une partie des transitions T4 et T3.

Il faut encore noter que le procédé et le dispositif destinés à sa mise en oeuvre sont valides aussi bien pour des interrogations par voie Radio Fréquence rayonnée (Mains Libres) ou conduite (dit « Touch Control »).

Le procédé et le dispositif de l'invention se prête particulièrement bien à leur intégration avec un « Touch Control » puisque ce système possède l'avantage de sécuriser parfaitement l'entrée à l'état « Idle Stop » : Par la définition même de ce système, il est en effet certain que l'identifiant se trouve sur le conducteur.

En regard du procédé décrit dans le présent document, l'intégration des systèmes alterno-démarreur et « Touch Control » se réalise moyennant la suppression, l'allègement ou la modification de certaines conditions de passages.

En effet, certaines de ces conditions sont propres au cas d'une émission rayonnée et n'ont pas d'existence dans le cas du système « Touch Control ». A titre d'exemple, il faut citer la détection de la disparition ou de l'éloignement de l'identifiant qui ne peut pas exister pour un système de type « Touch Control ».

Il faut encore noter que le procédé propre à l'invention peut faire l'objet d'une désactivation par l'utilisateur. Une telle possibilité peut facilement être ajoutée dans la logique, notamment dans la transition T1 pour conditionner celle-ci à l'absence de désactivation

## Revendications

1. Procédé de gestion du moteur d'un véhicule, dans lequel le véhicule comprend un système embarqué d'identification coopérant avec au moins un identifiant portatif équipé de moyens de communications électromagnétiques en vue d'identifier un utilisateur autorisé, ledit système comporte des moyens aptes à détecter les états ouvert/fermé et/ou verrouillé/déverrouillé des ouvrants, des moyens de condamnation/décondamnation des ouvrants du véhicule, un moyen de commande dans le véhicule apte à déclencher le démarrage du moteur lorsqu'il est actionné par l'utilisateur, et un système d'alterno-démarreur apte à passer à l'état « Idle Stop » dans des conditions prédéterminées depuis un état « Moteur Tournant » et inversement, **caractérisé en ce qu'**il comprend une étape de détection de changement d'état ouvert/fermé et/ou verrouillé/déverrouillé d'au moins un ouvrant du véhicule, une étape d'interrogation de l'identifiant par le système embarqué de sorte que si au moins un identifiant est localisé à l'extérieur de l'habitacle du véhicule et qu'aucun identifiant n'est détecté à l'intérieur, le moteur passe de l'état « Moteur Tournant » à l'état « Idle Stop » ; la mise à l'état « Idle Stop » du moteur s'effectuant alors que l'ensemble des susdites conditions prédéterminées, ou seulement une partie, est vérifiée.

2. Procédé selon la revendication 1, **caractérisé en ce que**, suite à la mise à l'état « Idle Stop » du moteur et la condamnation des ouvrants depuis l'extérieur du véhicule, une étape de temporisation est enclenchée afin de déterminer le temps écoulé depuis ce changement d'état du moteur.

3. Procédé selon la revendication 2, **caractérisé en ce qu'**il comprend un temps de référence, ou de seuil, relatif à la susdite étape de temporisation de sorte que si l'étape de temporisation détermine un temps écoulé supérieure à ce temps de référence, le contact est coupé/désactivé de sorte que le moteur passe de l'état « Idle Stop » à l'état « Moteur Arrêté ».

4. Procédé selon la revendication 1, **caractérisé en ce que**, si un ordre de condamnation d'au moins un ouvrant du véhicule est transmis par télécommande au véhicule via un identifiant lorsque le moteur est à l'état « Idle Stop », le contact est coupé/désactivé de sorte que le moteur à l'état « Idle Stop » passe à l'état « Moteur Arrêté ».

5. Procédé selon l'une quelconque des revendications précédentes, **caractérisé en ce que** le passage d'état du moteur depuis l'état « Idle Stop » à l'état « Moteur Tournant » s'effectue par une simple action de l'utilisateur après le déverrouillage du véhicule, par exemple une pression sur la pédale d'embrayage ou d'accélération sans qu'il n'existe d'étape de redémarrage du moteur à l'ouverture de porte ni d'identification spécifique par le système embarqué.

6. Procédé selon l'une quelconque des revendications 1 à 4, **caractérisé en ce qu'**il comprend au moins une étape de détermination du niveau de la batterie du véhicule lorsque le moteur est à l'état « Idle Stop ».

7. Procédé selon la revendication 6, **caractérisé en ce que** l'étape de détermination du niveau de la batterie comprend une étape de comparaison de ce niveau avec un niveau de référence, ou seuil, de sorte que lorsque le niveau de la batterie est inférieur ou égal à ce niveau de référence, le système embarqué d'identification effectue un test de présence d'identifiant(s) dans une zone déterminée, en particulier dans l'habitacle du véhicule.

8. Procédé selon la revendication 7, **caractérisé en ce que** si le test de présence d'identifiant(s) dans la zone déterminée est positif, signifiant la présence effective d'au moins un identifiant dans l'habitacle, le moteur passe directement, c'est à dire sans action de l'utilisateur, de l'état « Idle Stop » à l'état « Moteur Tournant » et si le test de présence est négatif, le contact est coupé/désactivé de sorte que le moteur passe de l'état « Idle Stop » à l'état « Moteur Arrêté ».

9. Procédé selon la revendication 8, **caractérisé en ce que** si le moteur est dans l'état « Moteur Arrêté » consécutivement à un test de présence négatif, la mise en activité des dispositifs contre une utilisation non autorisée du véhicule, en particulier le blocage de la colonne de direction, est inhibée.

10. Dispositif pour la mise en oeuvre du procédé selon l'une quelconque des revendications précédentes destiné à un véhicule, **caractérisé en ce qu'**il comprend un système embarqué d'identification coopérant avec au moins un identifiant portatif équipé de moyens de communications électromagnétiques en vue d'identifier un utilisateur autorisé, ledit système comporte des moyens aptes à détecter les états ouvert/fermé et/ou verrouillé/déverrouillé des ouvrants, des moyens de condamnation/décondamnation des ouvrants du véhicule, un moyen d'interrogation pour détecter si un identifiant est localisé à l'intérieur de l'habitacle du véhicule, un moyen de commande dans le véhicule apte à déclencher le démarrage du moteur lorsqu'il est actionné par l'utilisateur, et un système d'alterno-démarreur apte à passer à l'état « Idle Stop » dans des conditions prédéterminées depuis un état « Moteur Tournant » et inversement.

11. Dispositif selon la revendication 10, **caractérisé en ce que** le ou les identifiant(s) comprend/ent en outre un moyen de commande actif autorisant l'utilisateur à déclencher volontairement la condamnation/décondamnation des ouvrants.

## Claims

1. Method for managing the engine of a vehicle, in which the vehicle includes an embedded identification system cooperating with at least one hand-held identifier equipped with electromagnetic communication means in order to identify an authorized user, said system comprises means capable of detecting the open/closed and/or locked/unlocked states of the openings, means for disabling/enabling the openings of the vehicle, a control means in the vehicle capable of triggering the starting of the engine when actuated by the user, and an alternator-starter system capable of switching to the "idle stop" state in predetermined conditions from an "engine running" state, and vice versa, **characterized in that** it comprises a step for detecting a change of open/closed and/or locked/unlocked state of at least one opening of the vehicle, a step for querying the identifier by the embedded system so that, if at least one identifier is located outside the passenger compartment of the vehicle and no identifier is detected inside, the engine switches from the "engine running" state to the "idle stop" state; the setting of the engine to the "idle stop" state taking place when all the abovementioned predetermined conditions, or only a part thereof, are satisfied.

2. Method according to Claim 1, **characterized in that**, following the setting of the engine to the "idle stop" state and the disabling of the openings from the outside of the vehicle, a timer step is initiated in order to determine the elapsed time since this change of state of the engine.

3. Method according to Claim 2, **characterized in that** it comprises a reference time, or threshold time, relative to the abovementioned timer step so that, if the timer step determines an elapsed time greater than this reference time, the contact is cut/deactivated so that the engine switches from the "idle stop" state to the "engine stopped" state.

4. Method according to Claim 1, **characterized in that**, if a disabling command for at least one opening of the vehicle is transmitted by remote control to the vehicle via an identifier when the engine is in the "idle stop" state, the contact is cut/deactivated so that the engine in the "idle stop" state switches to the "engine stopped" state.

5. Method according to any one of the preceding claims, **characterized in that** engine state transition from the "idle stop" state to the "engine running" state is performed by a simple action on the part of the user after the unlocking of the vehicle, for example a pressure on the clutch or accelerator pedal without there being any engine restart step on opening the door or specific identification by the embedded system.

6. Method according to any one of Claims 1 to 4, **characterized in that** it comprises at least one step for determining the vehicle battery level when the engine is in the "idle stop" state.

7. Method according to Claim 6, **characterized in that** the step for determining the battery level comprises a step for comparing this level with a reference level, or threshold, so that, when the battery level is below or equal to this reference level, the embedded identification system performs a test for the presence of identifier(s) in a determined area, in particular in the passenger compartment of the vehicle.

8. Method according to Claim 7, **characterized in that**, if the test for presence of identifier(s) in the determined area is positive, indicating the actual presence of at least one identifier in the passenger compartment, the engine switches directly, that is to say with no action on the part of the user, from the "idle stop" state to the "engine running" state and, if the presence test is negative, the contact is cut/deactivated so that the engine switches from the "idle stop" state to the "engine stopped" state.

9. Method according to Claim 8, **characterized in that**, if the engine is in the "engine stopped" state following a negative presence test, the activation of the devices against unauthorized use of the vehicle, in particular flocking of the steering column, is inhibited.

10. Device for implementing the method according to any one of the preceding claims intended for a vehicle, **characterized in that** it comprises an embedded identification system cooperating with at least one hand-held identifier equipped with electromagnetic communication means in order to identify an authorized user, said system comprises means capable of detecting the open/closed and/or locked/unlocked states of the openings, means for disabling/enabling the openings of the vehicle, an interrogation means for detecting whether an identifier is located inside the passenger compartment of the vehicle, a control means in the vehicle capable of triggering the starting of the engine when actuated by the user, and an alternator-starter system capable of switching to the "idle stop" state in predetermined conditions from an "engine running" state, and vice versa.

11. Device according to Claim 10, **characterized in that** the identifier(s) also comprise an active control means allowing the user to deliberately trigger the disabling/enabling of the openings.

## Patentansprüche

1. Verfahren zur Verwaltung des Motors eines Fahrzeugs, bei dem das Fahrzeug ein eingebautes Identifikationssystem enthält, das mit mindestens einer tragbaren Benutzeridentifizierung zusammenwirkt, die mit elektromagnetischen Kommunikationseinrichtungen zur Identifizierung eines berechtigten Benutzers ausgestattet ist, wobei das System Einrichtungen, die fähig sind, die Zustände offen/geschlossen und/oder verriegelt/entriegelt der Türen zu erfassen, Einrichtungen zum Sperren/Entsperren der Türen des Fahrzeugs, eine Steuereinrichtung im Fahrzeug, die fähig ist, den Start des Motors auszulösen, wenn sie vom Benutzer betätigt wird, und ein Starter-Generator-System aufweist, das unter vorbestimmten Bedingungen ausgehend von einem Zustand "laufender Motor" in den Zustand "Idle Stop" und umgekehrt übergehen kann, **dadurch gekennzeichnet, dass** es einen Schritt der Erfassung einer Zustandsänderung offen/geschlossen und/oder verriegelt/entriegelt mindestens einer Tür des Fahrzeugs und einen Schritt der Abfrage der Benutzeridentifizierung durch das eingebaute System enthält, damit, wenn mindestens eine Benutzeridentifizierung außerhalb des Innenraums des Fahrzeugs lokalisiert und keine Benutzeridentifizierung im Inneren erfasst wird, der Motor vom Zustand "laufender Motor" in den Zustand "Idle Stop" übergeht, wobei der Übergang in den Zustand "Idle Stop" des Motors erfolgt, wenn die Gesamtheit der obigen vorbestimmten Bedingungen oder nur ein Teil erfüllt sind.

2. Verfahren nach Anspruch 1, **dadurch gekennzeichnet, dass** nach dem Übergang des Motors in den Zustand "Idle Stop" und dem Versperren der Türen von außerhalb des Fahrzeugs ein Verzögerungsschritt eingeschaltet wird, um die seit dieser Zustandsänderung des Motors vergangene Zeit zu bestimmen.

3. Verfahren nach Anspruch 2, **dadurch gekennzeichnet, dass** es eine Bezugs- oder Schwellwertzeit bezüglich des obigen Verzögerungsschritts enthält, so dass, wenn der Verzögerungsschritt eine vergangene Zeit höher als diese Bezugszeit bestimmt, der Kontakt unterbrochen/deaktiviert wird, damit der Motor vom Zustand "Idle Stop" in den Zustand "Motor ausgeschaltet" übergeht.

4. Verfahren nach Anspruch 1, **dadurch gekennzeichnet, dass**, wenn ein Sperrbefehl mindestens einer Tür des Fahrzeugs durch Fernbedienung an das Fahrzeug über eine Benutzeridentifizierung übertragen wird, wenn der Motor im Zustand "Idle Stop" ist, der Kontakt unterbrochen/deaktiviert wird, so dass der Motor im Zustand "Idle Stop" in den Zustand "Motor ausgeschaltet" übergeht.

5. Verfahren nach einem der vorhergehenden Ansprüclue, **dadurch gekennzeichnet, dass** der Zustandsübergang des Motors vom Zustand "Idle Stop" in den Zustand "laufender Motor" durch eine einfache Einwirkung des Benutzers nach der Entriegelung des Fahrzeugs erfolgt, zum Beispiel ein Druck auf das Kupplungsoder Gaspedal, ohne dass es einen Schritt des Neustarts des Motors beim Türöffnen oder einer spezifischen Identifizierung durch das eingebaute System gibt.

6. Verfahren nach einem der Ansprüche 1 bis 4, **dadurch gekennzeichnet, dass** es mindestens einen Schritt der Bestimmung des Pegels der Batterie des Fahrzeugs enthält, wenn der Motor im Zustand "Idle Stop" ist.

7. Verfahren nach Anspruch 6, **dadurch gekennzeichnet, dass** der Schritt der Bestimmung des Pegels der Batterie einen Schritt des Vergleichs dieses Pegels mit einem Bezugs- oder Schwellwertpegel enthält, damit, wenn der Pegel der Batterie unter oder gleich diesem Bezugspegel ist, das eingebaute Identifikationssystem einen Test des Vorhandenseins von Benutzeridantifizierung(en) in einer bestimmten Zone, insbesondere im Innenraum des Fahrzeugs, durchführt.

8. Verfahren nach Anspruch 7, **dadurch gekennzeichnet, dass**, wenn der Vorhandenseinstest von Benutzeridentifizierung(en) in der bestimmten Zone positiv ist, was das effektive Vorhandensein mindestens einer Benutzeridehtifizierung im Innenraum bedeutet, der Motor direkt, d.h. ohne Einwirkung des Benutzers, vom Zustand "Idle Stop" in den Zustand "laufender Motor" übergeht, und wenn der Vorhandenseinstest negativ ist, der Kontakt unterbrochen/deaktiviert wird, so dass der Motor vom Zustand "Idle Stop" in den Zustand "Motor ausgeschaltet" übergeht.

9. Verfahren nach Anspruch 8, **dadurch gekennzeichnet, dass**, wenn der Motor nach einem negativen Vorhandenseinstest im Zustand "Motor ausgeschaltet" ist, die Aktivierung der Vorrichtungen gegen eine unerlaubte Benutzung des Fahrzeugs, insbesondere das Blockieren der Lenksäule, verhindert wird.

10. Vorrichtung zur Durchführung des Verfahrens nach einem der vorhergehenden Ansprüche, die für ein Fahrzeug bestimmt ist, **dadurch gekennzeichnet, dass** sie ein eingebautes Identifikationssystem enthält, das mit mindestens einer tragbaren Benutzeridentifizierung zusammenwirkt, die mit elektromagnetischen Kommunikationseinrichtungen zur Identifizierung eines berechtigten Benutzers ausgestattet ist, das System Einrichtungen, die fähig sind, die Zustände offen/geschlossen und/oder verriegelt/entriegelt der Türen zu erfassen, Einrichtungen zum Sperren/Entsperren der Türen des Fahrzeugs, eine Abfrageeinrichtung, um zu erfassen, ob eine Benutzeridentifizierung im Inneren des Innenraums des Fahrzeugs lokalisiert ist, eine Steuereinrichtung im Fahrzeug, die fähig ist, den Start des Motors auszulösen, wenn sie vom Benutzer betätigt wird, und ein Starter-Generator-System aufweist, das unter vorbestimmten Bedingungen ausgehend von einem Zustand "laufender Motor" in den Zustand "Idle Stop" und umgekehrt übergehen kann.

11. Vorrichtung nach Anspruch 10, **dadurch gekennzeichnet, dass** die Benutzeridentifizierung oder die Benutzeridentifizierungen außerdem eine aktive Steuereinrichtung enthält (enthalten), die es dem Benutzer erlaubt, absichtlich das Sperren/Entsperren der Türen auszulösen.
